# EUROPEAN PATENT APPLICATION

(11) **EP 2 653 280 A1**
(43) Date of publication of application: **23.10.2013**
(21) Application number: 13163711.8
(22) Date of filing: 15.04.2013
(51) Int. Cl.: B29B 17/00, B29C 31/04, E04B 1/84, B29C 70/12

(54) **Plastic acoustic material and methods of manufacturing thereof**

(30) Priority: 16.04.2012 US 201261624524 P
(71) Applicant: Golan Plastic Products Ltd., 15145 D.N. Emek Hayarden (IL)
(72) Inventor: Peled, Shany, Netanya (IL); Eiger, Shlomi, Tel Aviv (IL); Ziv, Yariv, TEL AVIV (IL); Marco, Doron, TEL AVIV (IL); Korin, Shimon, 15120 Dgania Aleph (IL)
(74) Representative: Øen, Petter

(57) **Abstract**

A method of manufacturing plastic acoustic material including transforming plastic precursor material into plastic granules, filling a mold with the granules while forming air pockets between the granules in the mold, heating the mold, thereby at least partially melting the granules in the mold, and cooling the mold, thereby allowing the at least partially melted granules to solidify around the air pockets and thereby forming the plastic acoustic material.

## Description

### FIELD OF THE INVENTION

The present invention relates to plastic acoustic material and methods of manufacturing thereof.

### BACKGROUND OF THE INVENTION

Various types of plastic acoustic material and methods of manufacturing thereof are known.

### SUMMARY OF THE INVENTION

The present invention provides plastic acoustic material and methods of manufacturing thereof.

There is thus provided in accordance with a preferred embodiment of the present invention a method of manufacturing plastic acoustic material including transforming plastic precursor material into plastic granules, filling a mold with the granules while forming air pockets between the granules in the mold, heating the mold, thereby at least partially melting the granules in the mold, and cooling the mold, thereby allowing the at least partially melted granules to solidify around the air pockets and thereby forming the plastic acoustic material.

Preferably, transforming plastic precursor material into plastic granules includes placing the plastic precursor material in a heated extruder, after the plastic precursor material is heated to a melted state in the extruder, applying pressure to the precursor material by a piston element, thereby extruding generally uniform thin strips of plastic material through apertures formed in a surface of the extruder, and grinding the thin strips of plastic material into plastic granules.

Additionally or alternatively, transforming plastic precursor material into plastic granules includes passing the plastic precursor material through a two-roller flattening device, thereby transforming the plastic precursor material into generally flat strips of plastic material, employing a heat press to further transform the strips of plastic material into generally uniform plastic plates and grinding the generally uniform plastic plates into plastic granules.

Preferably, the granules have a thickness ranging between 10 and 100 microns. Preferably, the granules have a length ranging between 1 and 50 millimeters. Preferably, the acoustic absorbing plastic material has an NRC value ranging between 0.2 and 1.

There is also provided in accordance with another preferred embodiment of the present invention a plastic acoustic material including a plurality of mutually heat fused plastic granules, the granules being heat fused about a plurality of air pockets.

Preferably, the granules have a thickness ranging between 10 and 100 microns. Preferably, the granules have a length ranging between 1 and 50 millimeters. Preferably, the acoustic absorbing plastic material has an NRC value ranging between 0.2 and 1.

There is also provided in accordance with another preferred embodiment of the present invention a method of manufacturing plastic acoustic material including transforming plastic precursor material into plastic granules, filling a mold with the granules while forming air pockets between the granules in the mold, further filling the mold with an adhesive substance, and allowing the adhesive to solidify, thereby allowing the granules to mutually adhere around the air pockets and thereby forming the plastic acoustic material.

Preferably, transforming plastic precursor material into plastic granules includes placing the plastic precursor material in a heated extruder, after the plastic precursor material is heated to a melted state in the extruder, applying pressure to the precursor material by a piston element, thereby extruding generally uniform thin strips of plastic material through apertures formed in a surface of the extruder, and grinding the thin strips of plastic material into plastic granules.

Additionally or alternatively, transforming plastic precursor material into plastic granules includes passing the plastic precursor material through a two-roller flattening device, thereby transforming the plastic precursor material into generally flat strips of plastic material, employing a heat press to further transform the strips of plastic material into generally uniform plastic plates and grinding the generally uniform plastic plates into plastic granules.

Preferably, the granules have a thickness ranging between 10 and 100 microns. Preferably, the granules have a length ranging between 1 and 50 millimeters. Preferably, the plastic acoustic material has an NRC value ranging between 0.2 and 1.

There is also provided in accordance with another preferred embodiment of the present invention a plastic acoustic material including a plurality of mutually adhered plastic granules, the granules being mutually adhered about a plurality of air pockets.

Preferably, the granules have a thickness ranging between 10 and 100 microns. Preferably, the granules have a length ranging between 1 and 50 millimeters. Preferably, the acoustic absorbing plastic material has an NRC value ranging between 0.2 and 1.

### BRIEF DESCRIPTION OF THE DRAWINGS

The present invention will be understood more fully from the following detailed description, taken in conjunction with the drawings in which:

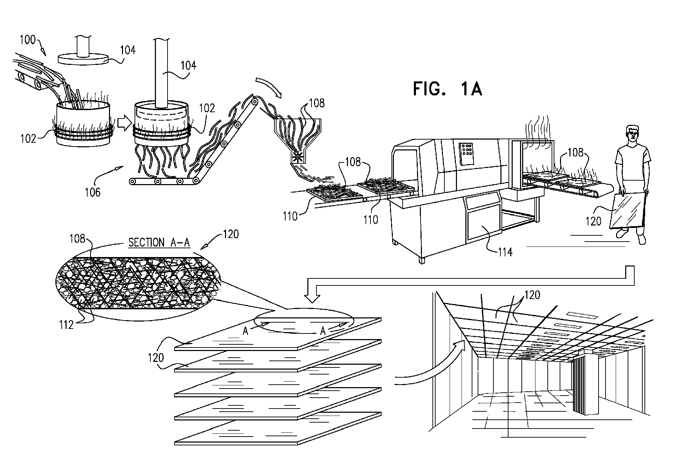

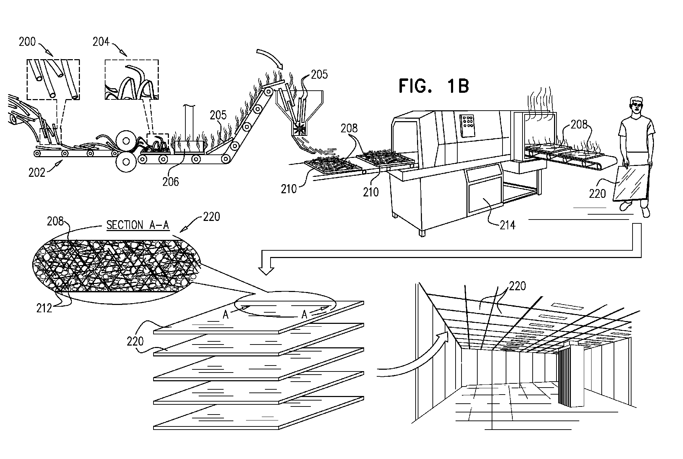

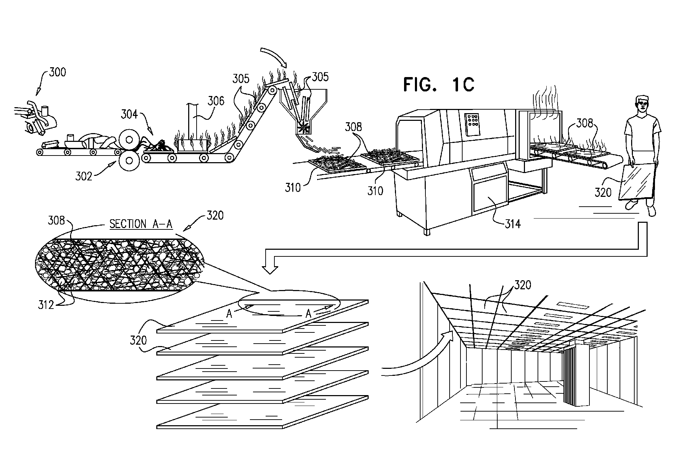

Figs. 1A, 1B and 1C are simplified pictorial illustrations of methods of manufacturing plastic acoustic material in accordance with preferred embodiments of the present invention.

### DETAILED DESCRIPTION OF PREFERRED EMBODIMENTS

Reference is now made to Figs. 1A, 1B and 1C, which are simplified pictorial illustrations of methods of manufacturing plastic acoustic material in accordance with preferred embodiments of the present invention. The methods illustrated in Figs. 1A - 1C preferably include transforming precursor plastic material into plastic granules, filling a mold with the granules while forming air pockets between the granules in the mold, heating the mold, thereby at least partially melting the granules in the mold, and cooling the mold, thereby allowing the at least partially melted granules to solidify around the air pockets and thereby forming the plastic acoustic material.

Preferably, the granules have a thickness which ranges between 10 and 100 microns and a length which ranges between 1 and 50 millimeters. The manufactured acoustic absorbing plastic material preferably has an NRC value which ranges between 0.2 and 1.

As shown in Fig. 1A, plastic precursor plastic material 100 is initially placed in a heated extruder 102. After being heated to a melted state, pressure is applied to melted plastic material 100 as by a piston element 104, thereby extruding generally uniformly thin strips of melted plastic material 106 through apertures formed in a surface of extruder 102, which strips 106 are then allowed to cool. It is appreciated that plastic precursor material 100 is typically plastic material designated for recycling.

Thereafter, strips 106 are ground down to plastic granules 108. Molds 110 are then preferably filled with plastic granules 108 while air pockets 112 are formed between granules 108 in molds 110. Molds 110 are then preferably passed through a heating device, such as an oven 114, where granules 108 in molds 110 are heated and are at least partially melted. After passing through oven 114, molds 110 are allowed to cool, thereby allowing at least partially melted granules 108 to solidify around air pockets 112, thereby forming sheets of plastic acoustic material 120. It is appreciated that molds 110 may be of any size and shape.

Alternatively, sheets 120 may be formed by filling molds 110 with an adhesive operative to cause granules 108 to mutually adhere around air pockets 112, in which case oven 114 may be obviated.

It is a particular feature of the present invention that air pockets 112 which are formed in plastic material 120 are operative to provide acoustic properties to plastic material 120.

As further shown in Fig. 1A, sheets of plastic acoustic material 120 may be employed, for example, in the construction of acoustic ceilings.

Alternatively, as shown in Fig. 1B, plastic pipes 200 designated for recycling are initially passed through a two-roller flattening device 202, which is operative to transform plastic pipes 200 into generally flat plastic strips 204. Strips 204 are then further flattened into generally uniform plastic plates 205 as by a heat press 206.

Thereafter, generally uniform plastic plates 205 are ground down to plastic granules 208. Molds 210 are then preferably filled with plastic granules 208 while air pockets 212 are formed between granules 208 in molds 210. Molds 210 are then preferably passed through a heating device, such as an oven 214, where granules 208 in molds 210 are heated and are at least partially melted. After passing through oven 214, molds 210 are allowed to cool, thereby allowing at least partially melted granules 208 to solidify around air pockets 212, thereby forming sheets of plastic acoustic material 220. It is appreciated that molds 220 may be of any size and shape.

Alternatively, sheets 220 may be formed by filling molds 210 with an adhesive operative to cause granules 208 to mutually adhere around air pockets 212, in which case oven 214 may be obviated.

It is a particular feature of the present invention that air pockets 212 which are formed in plastic material 220 are operative to provide acoustic properties to plastic material 220.

As further shown in Fig. 1B, sheets of plastic acoustic material 220 may be employed, for example, in the construction of acoustic ceilings.

Alternatively, as shown in Fig. 1C, plastic scrap material 300 designated for recycling is initially passed through a two-roller flattening device 302, which is operative to transform plastic scrap material 300 into generally flat plastic strips 304. Strips 304 are then further flattened into generally uniform plastic plates 305 as by a heat press 306.

Thereafter, generally uniform plastic plates 305 are ground down to plastic granules 308. Molds 310 are then preferably filled with plastic granules 308 while air pockets 312 are formed between granules 308 in molds 310. Molds 310 are then preferably passed through a heating device, such as an oven 314, where granules 308 in molds 310 are heated and are at least partially melted. After passing through oven 314, molds 310 are allowed to cool, thereby allowing at least partially melted granules 308 to solidify around air pockets 312, thereby forming sheets of plastic acoustic material 320. It is appreciated that molds 320 may be of any size and shape.

Alternatively, sheets 320 may be formed by filling molds 310 with an adhesive operative to cause granules 308 to mutually adhere around air pockets 312, in which case oven 314 may be obviated.

It is a particular feature of the present invention that air pockets 312 which are formed in plastic material 320 are operative to provide acoustic properties to plastic material 320.

As further shown in Fig. 1C, sheets of plastic acoustic material 320 may be employed, for example, in the construction of acoustic ceilings.

It will be appreciated by persons skilled in the art that the present invention is not limited by what has been particularly shown and described hereinabove. Rather the scope of the present invention includes both combinations and subcombinations of the various features described hereinabove as well as modifications thereof which would occur to persons skilled in the art upon reading the foregoing description and which are not in the prior art.

## Claims

1. A method of manufacturing plastic acoustic material comprising:
transforming plastic precursor material into plastic granules;
filling a mold with said granules while forming air pockets between said granules in said mold;
heating said mold, thereby at least partially melting said granules in said mold; and
cooling said mold, thereby allowing said at least partially melted granules to solidify around said air pockets and thereby forming said plastic acoustic material.

2. A method of manufacturing plastic acoustic material comprising:
transforming plastic precursor material into plastic granules;
filling a mold with said granules while forming air pockets between said granules in said mold;
further filling said mold with an adhesive substance; and
allowing said adhesive to solidify, thereby allowing said granules to mutually adhere around said air pockets and thereby forming said plastic acoustic material.

3. A method according to claim 1 or claim 2 and wherein said transforming plastic precursor material into plastic granules comprises:
placing said plastic precursor material in a heated extruder;
after said plastic precursor material is heated to a melted state in said extruder, applying pressure to said precursor material by a piston element, thereby extruding generally uniform thin strips of plastic material through apertures formed in a surface of said extruder; and
grinding said thin strips of plastic material into plastic granules.

4. A method according to claim 1 or claim 2 and wherein said transforming plastic precursor material into plastic granules comprises:
passing said plastic precursor material through a two-roller flattening device, thereby transforming said plastic precursor material into generally flat strips of plastic material;
employing a heat press to further transform said strips of plastic material into generally uniform plastic plates; and
grinding said generally uniform plastic plates into plastic granules.

5. A method according to claim 1 or claim 2 and wherein said granules have a thickness ranging between 10 and 100 microns.

6. A method according to claim 1 or claim 2 and wherein said granules have a length ranging between 1 and 50 millimeters.

7. A method according to claim 1 or claim 2 and wherein said plastic acoustic material has an NRC value ranging between 0.2 and 1.

8. A plastic acoustic material comprising:
a plurality of mutually heat fused plastic granules, said granules being heat fused about a plurality of air pockets.

9. A plastic acoustic material comprising:
a plurality of mutually adhered plastic granules, said granules being mutually adhered about a plurality of air pockets.

10. A plastic acoustic material according to claim 8 or claim 9 and wherein said granules have a thickness ranging between 10 and 100 microns.

11. A plastic acoustic material according to claim 8 or claim 9 and wherein said granules have a length ranging between 1 and 50 millimeters.

12. A plastic acoustic material according to claim 8 or claim 9 and wherein said acoustic absorbing plastic material has an NRC value ranging between 0.2 and 1.
